(19) Europäisches Patentamt
European Patent Office
Office européen des brevets

(11) **EP 1 084 034 B1**

(12) **EUROPEAN PATENT SPECIFICATION**

(45) Date of publication and mention
of the grant of the patent:
**15.09.2004 Bulletin 2004/38**

(51) Int Cl.⁷: **B32B 27/32**, B32B 27/28,
B65D 65/40, C08L 25/10

(21) Application number: **99920634.5**

(22) Date of filing: **09.04.1999**

(86) International application number:
**PCT/EP1999/002433**

(87) International publication number:
**WO 1999/054133 (28.10.1999 Gazette 1999/43)**

(54) **MULTILAYER PACKAGING FILM AND BAG MADE THEREFROM**

MEHRSCHICHTIGER VERPACKUNGSFILM UND DARAUS HERGESTELLTER BEUTEL

FILM D'EMBALLAGE MULTICOUCHE ET SACHET FAIT DE CE FILM

(84) Designated Contracting States:
**AT BE CH DE DK ES FI FR GB GR IE IT LI LU NL PT SE**

(30) Priority: **20.04.1998 EP 98107175**

(43) Date of publication of application:
**21.03.2001 Bulletin 2001/12**

(73) Proprietor: **Cryovac, Inc.**
**Duncan, S.C. 29334-0464 (US)**

(72) Inventors:
• **PALEARI, Mario**
**I-20010 Pogliano Milanese (IT)**
• **FORNASIERO, Tito**
**I-20017 Rho (IT)**

(74) Representative: **De Carli, Elda**
**Sealed Air S.r.l.,**
**Via Trento 7**
**20017 Passirana di Rho (MI) (IT)**

(56) References cited:
EP-A- 0 390 442          EP-A- 0 499 669
EP-A- 0 646 633          EP-A- 0 707 957
EP-A- 0 739 713          WO-A-97/19140
WO-A-97/42897            US-A- 4 210 686
US-A- 4 322 465          US-A- 4 405 666
US-A- 4 643 926          US-A- 5 707 750

• DATABASE WPI Section Ch, Week 199523
Derwent Publications Ltd., London, GB; Class
A18, AN 1995-175114 XP002077319 & JP 07
096583 A (DAINIPPON PRINTING CO LTD), 11
April 1995 (1995-04-11)
• DATABASE WPI Section Ch, Week 199425
Derwent Publications Ltd., London, GB; Class
A32, AN 1994-205763 XP002077320 & JP 06
143408 A (SEKISUI CHEM IND CO LTD) , 24 May
1994 (1994-05-24)

**Description**

The present invention refers to a multi-layer thermoplastic film, mono- or bi-axially oriented, endowed with good mechanical properties, heat-sealability characteristics and shrink properties as well as to the bags and pouches made therefrom.

Multilayer, mono- or bi-axially oriented, thermoplastic films are being used for packaging various items.

In particular, mono- or bi-axially oriented, heat-shrinkable thermoplastic films have found many useful applications in the packaging industry for food e.g. fresh red meat, processed meat, cheese, poultry, bakery, etc., and non food items.

In general terms, the packaging of food and non-food items by means of an oriented, heat-shrinkable thermoplastic film comprises configuring the packaging material, either partially or completely, around a product (e.g. by placing the article within a bag fabricated from the film), removing excess air from inside the package (e.g. vacuumizing the bag), sealing it and thereafter exposing the package to a heat source thereby causing the heat-shrinkable film to shrink and conform with the contours of the packaged item.

These films should provide to the packaged item an attractive appearance and in the mean time guarantee that the packaged product would be protected from the environment during storage and distribution.

The attractive appearance is mainly dependent on the optics and on the shrink properties of the film.

As a matter of fact the transparency, clarity and glossiness of the film do contribute to the aesthetic consumer appeal of products packaged therein. Good optical properties also permit adequate inspection of the packaged product during the distribution cycle and by the end user at the point of purchase.

The shrink properties which depend on the shrink characteristics of the materials used and are imparted to the film by the process used for its manufacture also contribute to the attractive package appearance providing a tight, smooth appearance to the packaged article.

To protect the packaged item from the environment and keep the package unaltered until it is offered to the customer/consumer, good mechanical properties are required.

Particularly in case of a film to be used for packaging of rigid and tough articles, which may often have projections, or for packaging products with a long shelf-life, whose distribution chain does often comprise several steps, high mechanical properties are required to avoid that the article packaged might puncture and damage the film and to guarantee that the package will survive several handling steps.

In addition thereto the film should have good heat-sealing properties. Heat sealing is the process of joining two thermoplastic films or sheets by heating areas in contact with each other to the temperature at which fusion occurs, usually aided by pressure. Heat sealing is inclusive of impulse sealing, hot bar (or heated jaw) sealing, dielectric sealing, and ultrasonic sealing.

When packaging involves the use of bags or pouches, the packaging machine typically couples the sealing device that is used to seal the bag mouth, with a system to remove the excess film beyond the seal. This is done in order to improve the package appearance. In some instances a knife is used to cut out the excess film, while in others a hot wire is used to trim out said excess. In these latter case a hot wire is employed in order to fuse all the layers of the film and cut excess material from the package. It is therefore important that a film, particularly when suitable for the manufacture of bags or pouches, has a satisfactory hot wire trimmability. In some cases an insufficient hot wire trimmability may create problems as the time of exposure to the hot wire in order to get film trimming may be too long with respect to the speed of the packaging machine and therefore unacceptable from an industrial point of view. Alternatively when a higher current intensity is used to achieve a higher temperature of the hot trimming wire, the film may be burnt in this step and the life of the wire is reduced. This happens frequently with films that have been cross-linked (a treatment used to improve the film mechanical properties).

In the art it is known to suitably combine the different thermoplastic materials employed for the various layers of a packaging film with the aim at improving as much as possible the film characteristics, particularly those characteristics that are needed for the specific application foreseen.

It is however known that a resin that improves a specific property very often worsens the others and therefore the research efforts in this field actually tend to reach an optimum balance of these properties.

A first object of the present invention is a mono- or bi-axially oriented film endowed with a good balance of optical, mechanical, and heat-sealability properties, which can also be hot wire trimmed.

SUMMARY OF THE INVENTION

The present invention refers to a multi-layer, mono- or bi-axially oriented, heat-shrinkable thermoplastic film comprising at least :

a first outer heat-sealing layer (a) which comprises a polyolefin;

a second outer layer (b); and

an intermediate layer (c) comprising a TPE-S.

DEFINITIONS

As used herein the term "film" refers to a flat or tubular flexible structure of thermoplastic material having a thickness up to about 120 μm. Generally, for the purposes of the present invention, said structure will have a thickness of up to about 90 μm and typically up to about 60 μm.

As used herein the phrase "core layer" or "inner layer" or "intermediate layer" refer to any film layer having its two principal surfaces adhered to other layers of the multilayer film. The term "oxygen barrier core layer" is intended to refer to such a core layer having the primary function of reducing the oxygen permeability of the film.

As used herein the phrase "outer layer" or "skin layer" refer to any film layer having only one of its principal surfaces directly adhered to another layer of the film.

As used herein, the phrase "heat-sealing" or "heat-sealant" layer refers to an outer layer which is involved in the sealing of the film to itself, to another film layer of the same or another film, and/or to another article which is not a film.

The phrase "abuse layer" and "abuse-resistant layer" refer to the outer layer of the film which is not the sealant layer and which is subject to abuse.

As used herein the terms "adhesive layer" or "tie layer" refer to any inner layer having the primary purpose of adhering two layers to one another.

As used herein the phrase "directly adhered" as applied to film layers is defined as adhesion of the subject film layer to the object film layer, without a tie layer, an adhesive or other layer in-between. In contrast, as used herein, the word "between", as applied to a film layer expressed as being between two other specified layers, includes both direct adherence of the subject layer to the two other layers it is between, as well as a lack of direct adherence to either or both of the two other layers the subject layer is between, i.e. one or more additional layers can be present between the subject layer and one or more of the layers the subject layer is between.

The term "orientation" as used herein refers to a "solid-state orientation", i.e. to a process of orientation of the polymer molecules in the film layers, either in one direction, i.e. mono-axial orientation, or in two perpendicular directions, i.e. biaxial orientation, carried out at a temperature higher than the glass transition temperature (Tg) of all the polymers of the film layers but lower than the melting temperature of at least one of them, i.e. at a temperature at which the film is not in the molten state but still in the solid-state.

The term "heat-shrinkable" refers to a mono- or bi-axially oriented film which shrinks by at least 15 % of its original dimensions, in at least one of the longitudinal and transverse directions, when heated to 95°C for 4 seconds. The quantitative determination is carried out according to ASTM D 2732, as set forth in the 1990 Annual Book of ASTM Standards, Vol. 08.02, pp. 368-371.

The phrase "longitudinal direction" or " machine direction", herein abbreviated "MD", refers to a direction "along the length" of the film, i.e., in the direction of the film as the film is formed during extrusion and/or coating.

The phrase "transverse direction", herein abbreviated "TD", refers to a direction across the film, perpendicular to the machine direction.

As used herein, the term "homopolymer" is used with reference to a polymer resulting from the polymerization of a single monomer, i.e., a polymer consisting essentially of a single type of repeating unit.

As used herein, the term "copolymer" refers to polymers formed by the polymerisation reaction of at least two different monomers.

As used herein, the term "polymer" refers to both homo-polymers and co-polymers as defined above.

As used herein the term "polyolefin" is used with reference to any thermoplastic polymer of simple olefins such as ethylene, propylene, and butene, and co-polymer comprising a major proportion of a simple olefin and a minor proportion of one or more comonomers copolymerisable therewith such as typically another olefin, vinyl acetate, alkyl (meth)acrylate, (meth)acrylic acid, maleic anhydride, and the like, as well as modifications thereof. The term "polyolefin" specifically includes polyethylene, ethylene co-and ter-polymers, polybutene, propylene-butene co-polymer, and the like.

As used herein the terms "polyethylene" and "ethylene homopolymer" identify polymers consisting essentially of an ethylene repeating unit. Depending on the polymerisation process employed, polymers with a different degree of branching and a different density can be obtained. Those characterised by a low degree of branching and showing a density higher than 0.940 g/cm$^3$ are called HOPE while those with a higher level of branching and a density up to 0.940 g/cm$^3$ are called LDPE.

As used herein the term "ethylene copolymer" refers to the copolymers of ethylene with one or more other olefins and/or with a non-olefinic comonomer copolymerisable with ethylene, such as vinyl monomers, modified polymers thereof, and the like. Specific examples include ethylene/α-olefin copolymers, ethylene/vinyl acetate copolymers, ethylene/ethyl acrylate copolymers, ethylene/butyl acrylate copolymers, ethylene/methyl acrylate copolymers, ethylene/acrylic acid copolymers, ethylene/methacrylic acid copolymers, ionomer resins, ethylene/alkyl acrylate/maleic anhydride ter-polymers, etc..

As used herein, the phrase "heterogeneous polymer" refers to polymerisation reaction products of relatively wide variation in molecular weight and relatively wide variation in composition distribution, i.e., polymers made, for example, using conventional Ziegler-Natta catalysts. Such polymers typically contain a relatively wide variety of chain lengths and comonomer percentages.

As used herein, the phrase "homogeneous polymer" refers to polymerisation reaction products of relatively narrow molecular weight distribution and relatively narrow composition distribution. Homogeneous polymers exhibit a relatively even sequencing of comonomers within a chain, the mirroring of sequence distribution in all chains, and the similarity of length of all chains, and are typically prepared using metallocene, or other single-site type catalysis.

More particularly, homogeneous ethylene/$\alpha$-olefin copolymers may be characterised by one or more methods known to those of skill in the art, such as molecular weight distribution (Mw/Mn), composition distribution breadth index (CDBI), and narrow melting point range and single melt point behaviour.

A homogeneous ethylene/$\alpha$-olefin copolymer can, in general, be prepared by the copolymerisation of ethylene and any one or more $\alpha$-olefin. Preferably, the $\alpha$-olefin is a C3-C20 $\alpha$-mono-olefin, more preferably, a C4-C12 $\alpha$-mono-olefin, still more preferably, a C4-C8 $\alpha$-mono-olefin. Still more preferably, the $\alpha$-olefin comprises at least one member selected from the group consisting of butene-1, hexene-1, and octene-1. Most preferably, the $\alpha$-olefin comprises octene-1, and/or a blend of hexene-1 and butene-1.

Processes for preparing homogeneous polymers are disclosed in US Patent No. 5,206,075, US Patent No. 5,241,031, and PCT International Application WO 93/03093. Further details regarding the production and use of one genus of homogeneous ethylene/$\alpha$-olefin copolymers are disclosed in US Patent No. 5,206,075, to Hodgson, Jr.; US Patent No. 5,241,031, to Mehta; PCT International Publication Number WO 93/03093, in the name of Exxon Chemical Company; and PCT International Publication Number WO 90/03414, in the name of Exxon Chemical Patents, Inc.. Still another genus of homogeneous ethylene/$\alpha$-olefin copolymers is disclosed in US Patent No. 5,272,236, to Lai, et. al., and US Patent No. 5,278,272, to Lai, et.al..

As used herein, the phrase "ethylene/$\alpha$-olefin copolymers", "ethylene/$\alpha$-olefin copolymers", refer to such heterogeneous materials as linear low density polyethylene (LLDPE), linear medium density polyethylene (LMDPE) and very low and ultra low density polyethylene (VLDPE and ULDPE); and homogeneous polymers such as metallocene catalysed polymers such as EXACT™ materials supplied by Exxon, AFFINITY™ and ENGAGE™ materials supplied by Dow, LUFLEXEN™ materials supplied by BASF and TAFMER™ materials supplied by Mitsui Petrochemical Corporation. These materials generally include copolymers of ethylene with one or more comonomers selected from C4 to C10 $\alpha$-olefins such as butene-1, hexene-1, octene-1, etc..

As used herein the term "modified polyolefin" is inclusive of modified polymer prepared by copolymerising the homopolymer of the olefin or copolymer thereof with an unsaturated carboxylic acid, e.g., maleic acid, fumaric acid or the like, or a derivative thereof such as the anhydride, ester or metal salt or the like; as well as of modified polymer obtained by incorporating, into the olefin homopolymer or copolymer, an unsaturated carboxylic acid, e.g. maleic acid, fumaric acid, or the like, or a derivative thereof such as the anhydride, ester or metal salt or the like. Examples of said modified polyolefins are graft copolymers of maleic acid or anhydride onto ethylene/$\alpha$-olefin copolymers, graft copolymers of fused ring carboxylic anhydrides onto polyethylene, resin mixtures of these and mixtures with polyethylene or ethylene/$\alpha$-olefin copolymers.

As used herein the term "ethytene-acrylic acid and ethylene-methacrylic acid copolymers" refers to copolymers of ethylene with a copolymerisable ethylenically unsaturated carboxylic acidic monomer selected from acrylic acid and methacrylic acid. The copolymer typically contains from about 4 to about 18% by weight of acrylic or methacrylic acid units. Said copolymer can also contain, copolymerised therein an alkyl (meth)acrylate, such as n-butyl acrylate or methacrylate or isobutyl acrylate or methacrylate. Said copolymer can be in the free acid form as well as in the ionised or partially ionised form wherein the neutralising cation can be any suitable metal ion, e.g. an alkali metal ion, a zinc ion or other multivalent metal ions; in this latter case the copolymer is also termed "ionomer".

As used herein the term "ethylene-vinyl acetate copolymer" or "EVA" is intended to refer to a copolymer formed from ethylene and vinyl acetate monomers wherein the ethylene derived units in the copolymer are present in major amounts; preferably between about 60% and 98% by weight and the vinyl acetate derived units in the copolymer are present in minor amounts, preferably between about 2% and about 40% by weight.

As used herein the term "ethylene-alkyl (meth)acrylate copolymers" refers to copolymers of ethylene with alkyl (meth)acrylates, e.g. methyl (meth)acrylate, butyl (meth)acrylate, and iso-butyl (meth)acrylate wherein the ethylene derived units in the copolymer are present in major amounts and the alkyl (meth)acrylate derived units in the copolymer are present in minor amounts, preferably between about 2% and about 28% by weight.

As used herein the term EVOH refers to saponified products of ethylene-vinyl ester copolymers, generally of ethylene-vinyl acetate copolymers, wherein the ethylene content is typically comprised between 20 and 60% by mole and the degree of saponification is generally higher than 85% preferably higher than 95%.

As used herein TPE, i.e. thermoplastic elastomer, is any of a family of polymers that resemble elastomers in that they are highly resilient and can be repeatedly stretched to at least twice their initial lengths with full rapid recovery, but are true thermoplastics and thus do not require curing or vulcanisation.

As used herein TPE-S is a TPE based on styrene block copolymer (SBC), i.e. a linear or branched (star-shaped) block copolymer comprising styrene. Examples of TPE-S are styrene-butadiene-styrene block terpolymer (SBS), styrene-ethylene/butene-styrene block terpolymer (SEBS), and styrene-isoprene-styrene block terpolymer (SIS). Also included within this group are the hydrogenated derivatives thereof.

As used herein, the term polyamide is intended to refer to both polyamides and co-polyamides. This term specifically includes those aliphatic polyamides or copolyamides commonly referred to as e.g. polyamide 6 (homopolymer based on ε- caprolactam), polyamide 66 (homopolycondensate based on hexamethylene diamine and adipic acid), polyamide 69 (homopolycondensate based on hexamethylene diamine and azelaic acid), polyamide 610 (homopolycondensate based on hexamethylene diamine and sebacic acid), polyamide 612 (homopolycondensate based on hexamethylene diamine and dodecandioic acid), polyamide 11 (homopolymer based on 11-aminoundecanoic acid), polyamide 12 (homopolymer based on ω-aminododecanoic acid or on laurolactam), polyamide 6/12 (polyamide copolymer based on ε-caprolactam and laurolactam), polyamide 6/66 (polyamide copolymer based on hexamethylenediamine and adipic acid and ε-caprolactam), polyamide 66/610 (polyamide copolymers based on hexamethylenediamine, adipic acid and sebacic acid), modifications thereof and blends thereof. Said term also includes crystalline or partially crystalline, aromatic or partially aromatic, polyamides.

For the purposes of the present invention the term polyesters also includes copolyesters, and polyether/polyesters (i.e. block co-polymers), such as those products obtained by copolymerisation of typically aromatic di-carboxylic acids, such as isophthalic acid and, preferably, terephthalic acid, with one or more glycols, such as ethylene glycol, butylene glycol, and cyclohexanedimethanol.

Melting information by DSC are reported as second heating data, i.e., the sample is heated at a programmed rate of 10°C/min to a temperature below its critical range, and is then reheated (2$^{nd}$ heating) still at a programmed rate of 10°C/min.

Density is measured by ASTM D 792.

Melt Flow Index is measured according to ASTM D-1238, Condition E, at 190°C and is reported as grams per 10 minutes

DETAILED DESCRIPTION OF THE INVENTION

Object of the present invention is a multi-layer, mono- or bi-axially oriented, heat-shrinkable thermoplastic film comprising at least :

a first outer heat-sealing layer (a) which comprises a polyolefin;
a second outer layer (b); and
an intermediate layer (c) comprising a TPE-S.

In the films according to the present invention the heat-sealing layer (a) may comprise a single polymer or a blend of two or more polymers as known in the art. Preferably the melting point of the polyolefin resin(s) of the heat-sealing layer (a) will be < 140 °C, and more preferably < 130°C. In a most preferred embodiment it will be comprised between about 80°C and about 128 °C.

Such a layer preferably comprises heterogeneous or homogeneous ethylene-(C$_4$-C$_8$)-α-olefin copolymers having a density ≤ 0.915 g/cm$^3$; blends thereof with minor amount of polyethylene homopolymers; ethylene-vinyl acetate copolymers; ethylene-acrylic or methacrylic acid copolymers including ionomers; blends of heterogeneous or homogeneous ethylene-(C$_4$-C$_8$)-α-olefin copolymers having a density from about 0.915 g/cm$^3$ to about 0.930 g/cm$^3$ with ethylene-vinyl acetate copolymers or ethylene-alkyl (meth)acrylate copolymers; ethylene-propylene copolymers; ethylene-propylene-butene ter-polymers; ethylene-alkyl acrylate-maleic anhydride ter-polymers; and the like polymers.

In a more preferred embodiment of the present invention the heat-sealing layer (a) will comprise a heteroge-neous or homogeneous ethylene-(C$_4$-C$_8$)-α-olefin copolymer having a density ≤ 0.915 g/cm$^3$, and even more preferably a heterogeneous or homogeneous ethylene-(C$_4$-C$_8$)-α-olefin copolymer having a density comprised between about 0.895 g/cm$^3$ and about 0.912 g/cm$^3$. The Melt Index of said heterogeneous or homogeneous ethylene-(C$_4$-C$_8$)-α-olefin copolymer may range from about 0.1 to about 15 g/10'. However, preferred values are in the range 0.5-10 g/10' and even more preferred values are in the range 1.0-7.0 g/10'.

The thickness of the heat-sealing layer (a) typically depends on the overall thickness of the film and on the number of layers present in the structure. In case of thin films it generally ranges from about 2 μm to e.g. about 6, or 8, or 10 μm. In case of thicker films, such as those used for the manufacture of bag or pouches, having a thickness up to about 120 μm, the thickness of the heat-sealing layer (a) may be much higher, e.g. up to about 50-60 μm and

even more.

The second outer layer (b) may be used as an additional sealant layer, particularly in case of thin symmetrical structures, or it can be used as an abuse resistant outer layer, particularly in the manufacture of bags or pouches from thicker unsymmetrical structures.

It comprises at least one member selected from the group consisting of polyolefin, polyamide, polyester, and polystyrene.

In a preferred embodiment of the present invention the outer layer (b) will comprise one member selected from the group consisting of polyolefin and polyamide.

In one embodiment of the invention the outer layer (b) will comprise heterogeneous or homogeneous ethylene-$(C_4-C_8)$-$\alpha$-olefin copolymers, polyethylene homopolymers, ethylene-vinyl acetate copolymers, ethylene-acrylic or methacrylic acid copolymers including ionomers, and blends thereof. Preferably the outer layer (b) will comprise heterogeneous or homogeneous ethylene- $(C_4-C_8)$-$\alpha$-olefin copolymers, polyethylene homopolymers, ethylene-vinyl acetate copolymers and blends thereof.

In another preferred embodiment of the invention, and particularly when high abuse resistant properties are desired, the outer layer (b) will comprise a polyamide. Preferred polyamides will have a melting temperature lower than about 220 °C, generally lower than about 200 °C. Even more preferred polyamides will have a melting temperature comprised between about 120 °C and about 180 °C.

Also the thickness of the outer layer (b) is not critical. When, according to a preferred embodiment of the present invention, a polyamide is used, few $\mu$m, e.g. 5 to 10 $\mu$m, will be sufficient to impart to the film high abuse resistance properties. When a polyolefin is used for the outer layer (b) and high abuse resistance properties are desired, a higher thickness will be preferred to achieve the desired abuse resistance properties.

The intermediate layer (c) will comprise a TPE-S, i.e. a thermoplastic elastomer based on linear or branched (star-shaped) block copolymers comprising styrene. Examples of TPE-S are styrene-butadiene-styrene block terpolymer (SBS), styrene-ethylene/butene-styrene block terpolymer (SEBS), and styrene-isoprene-styrene block terpolymer (SIS). Also included within this group are the hydrogenated derivatives thereof.

In a preferred embodiment however said intermediate layer (c) will comprise SBS polymers or their hydrogenated derivatives.

Suitable SBS block copolymers can be prepared e.g. by the processes described in BE-A-824,226, GB-A-2,138,009, and WO-A-9535335.

Particularly preferred are those SBS block copolymers comprising 1 to 40 % by volume of a hard phase-forming polystyrene block with a Tg higher than 25 °C and 99 to 60 % by volume of a soft phase-forming styrene-butadiene block copolymer with a Tg lower than 25 °C.

Examples of commercially available suitable polymers for the intermediate layer (c) are e.g. Styrolux™ 684D and Styrolux™ 6104 by BASF, Finaclear™ 520 by Fina, and Tuftec™ H 1052 or H1041 by Asahi Chemical Industry.

The TPE-S can be used as such in said intermediate layer (c) or it can be blended with other compatible resins, e.g. LLDPE and LMDPE or the homogeneous ethylene/$\alpha$-olefin copolymers of equivalent density, as known in the art. When a blend of a TPE-S with other compatible resins is employed, the TPE-S is typically employed in a major proportion, preferably at least 50, more preferably at least 65 and most preferably at least 90 % by weight of the overall weight of the layer.

In a preferred embodiment however the intermediate layer (c) of the oriented films according to the present invention will essentially comprise one or more TPE-S.

It has been found that such a layer can be easily oriented and therefore positively contributes to the shrink properties of the film; that it positively and remarkably contributes to the overall mechanical properties of the film; that it does not negatively interfere with the film optical properties; and that it allows hot wire trimmability of the film also when the film is cross-linked.

Additional layers may or need to be present in the film according to the present invention.

As an example, depending on the polymers used for the outer layers, it may be desirable or necessary to have adhesive layers (d) adhering layer (c) to the outer layers (a) and (b).

The adhesive layers (d) generally comprise a suitable polyolefin, e.g. an ethylene-vinyl acetate copolymer, an ethylene-(meth)acrylic acid copolymer, an ethylene-styrene copolymer, etc., or a modified polyolefin as indicated above or a blend of a modified polyolefin with a polyolefin, as known in the art.

Examples of conventional modified polyolefins are for instance BYNEL™ CXA 4104 or BYNEL™ CXA 4105 marketed by DuPont, PLEXAR™ 169 marketed by Quantum, or some ADMER™ resins by Mitsui.

A gas barrier layer (e) may additionally be present, typically as an inner layer in the multilayer structure, to provide the film with the desired gas (typically oxygen) barrier properties.

The barrier material may be made of any of the known barrier polymeric resins, such as a PVDC (saran), EVOH, polyamide, etc..

When a high oxygen barrier layer is required, preferably said barrier layer will comprise PVDC or EVOH.

Examples of EVOH that may well be employed in the production of films according to the present invention are EVAL™ EC F151A or EVAL™ EC F101A, marketed by Marubeni.

A single EVOH or a blend of two or more EVOHs can be employed. Also a blend of one or more EVOHs with a minor amount of one or more polyamides may be employed. In this case, suitable polyamides are those commonly indicated as nylon 6, nylon 66, nylon 6/66, nylon 12, nylon 6/12, and the like. A preferred polyamide is nylon 6/12, a copolymer of $\varepsilon$-caprolactam with laurolactam, such as GRILON™ CF 6S or GRILON™ W8361 manufactured and marketed by EMS.

When a medium oxygen barrier layer or a selective $CO_2/O_2$ barrier layer is required, a polyamide, a blend of different polyamides or a blend of one or more polyamides with a minor amount of EVOH, can suitably be employed.

The thickness of the barrier layer will preferably vary, depending in general on the overall thickness of the film and on its use, between 2 and 15 µm. More preferably it will be comprised however between 2.5 and 7.5 µm.

Other inner layers can be added e.g. to increase the bulk of the overall structure, and/or further improve the shrink and/or the mechanical properties of the film, etc., as known in the art.

Thermoplastic resins which can suitably be employed in these optional additional layers, comprise polyolefins, and in particular heterogeneous ethylene-$\alpha$-olefin copolymers, homogeneous ethylene-$\alpha$-olefin copolymers, ethylene-vinyl acetate copolymers, ethylene acrylic acid copolymers, ethylene-methacrylic acid copolymers, ethylene-alkyl acrylate copolymers, and the like, and blends thereof.

In a preferred embodiment the barrier layer (e) is between the intermediate layer (c) and the outer layer (b).

A tie layer, or anyway a suitable intermediate bulk or shrink layer that can, at the same time, improve the mechanical and/or shrink properties of the film and the adhesion between the barrier layer (e) and the intermediate layer (c), will be positioned between these two layers.

In one preferred embodiment the film according to the present invention will comprise five layers : a first outer heat-sealing layer (a), a second outer layer (b), an intermediate layer (c), a core barrier layer (e) between the intermediate layer (c) and the outer layer (b) and a layer (d) adhering the intermediate layer (c) to the oxygen barrier layer (e).

In one preferred aspect of said embodiment the heat-sealing layer (a) will comprise an ethylene-vinyl acetate copolymer or an ethylene-(meth)acrylic acid copolymer optionally blended with a homogeneous or heterogeneous ethylene-$\alpha$-olefin copolymer, the outer layer (b) will comprise a polyamide, the intermediate layer (c) will comprise an SBS block copolymer, the barrier layer (e) will comprise EVOH and/or a polyamide, and the layer (d) adhering the intermediate layer (c) to the barrier layer (e), will comprise an ethylene-vinyl acetate copolymer or an ethylene-(meth) acrylic acid copolymer optionally blended with a modified ethylene-vinyl acetate copolymer.

In another preferred aspect of said embodiment the heat-sealing layer (a) will comprise an ethylene-vinyl acetate copolymer or an ethylene-(meth)acrylic acid copolymer optionally blended with a homogeneous or heterogeneous ethylene-$\alpha$-olefin copolymer, the outer layer (b) will comprise a polyolefin and preferably an ethylene-vinyl acetate copolymer or an ethylene-(meth)acrylic acid copolymer optionally blended with a homogeneous or heterogeneous ethylene-$\alpha$-olefin copolymer, the intermediate layer (c) will comprise an SBS block copolymer, the barrier layer (e) will comprise PVDC or EVOH, and the layer (d) adhering the intermediate layer (c) to the barrier layer (e), will comprise an ethylene-vinyl acetate copolymer or an ethylene-(meth)acrylic acid copolymer optionally blended with a modified ethylene-vinyl acetate copolymer.

The layer (d) may be used for both providing adhesion between layers (c) and (e) and improving the film mechanical and shrink properties. When the layer is only aimed at improving adhesion of the adjacent layers, it is typically 2-5 µm thick, while thicker layers will be used when this layer is also aimed at improving the film properties.

In another preferred embodiment the film according to the present invention will comprise six layers : a first outer heat-sealing layer (a), a second outer layer (b), an intermediate layer (c), a core barrier layer (e) between the intermediate layer (c) and the outer layer (b), a layer (d) adhering the intermediate layer (c) to the oxygen barrier layer (e), and a layer (d') adhering the barrier layer (e) to the outer layer (b).

In a preferred aspect of said embodiment the heat-sealing layer (a) will comprise an ethylene-vinyl acetate copolymer or an ethylene-(meth)acrylic acid copolymer optionally blended with a homogeneous or heterogeneous ethylene-$\alpha$-olefin copolymer, the outer layer (b) will comprise a polyamide, the intermediate layer (c) will comprise an SBS block copolymer, the barrier layer (e) will comprise PVDC, the layer (d) adhering the intermediate layer (c) to the barrier layer (e), will comprise an ethylene-vinyl acetate copolymer or an ethylene-(meth)acrylic acid copolymer optionally blended with a modified ethylene-vinyl acetate copolymer, and the layer (d') adhering the barrier layer (e) to the outer layer (b), will comprise an ethylene-vinyl acetate copolymer or an ethylene-(meth)acrylic acid copolymer optionally blended with a modified ethylene-vinyl acetate copolymer. Said layer (d') may be equal to or different from (d).

Also in this case the layers (d) and (d') may provide both for an improved adhesion between layers (c) and (e) and for improved mechanical and shrink properties of the overall structure.

In still another preferred embodiment the film according to the present invention will comprise seven layers : a first outer heat-sealing layer (a), a second outer layer (b), an intermediate layer (c), a core barrier layer (e) between the intermediate layer (c) and the outer layer (b), a layer (d) adhering the intermediate layer (c) to the oxygen barrier layer (e), a layer (d') adhering the barrier layer (e) to the outer layer (b), and a layer (d'') adhering the intermediate layer (c) to the outer heat-sealing layer (a).

In a preferred aspect of said embodiment the heat-sealing layer (a) will comprise an ethylene-vinyl acetate copolymer, an ethylene-(meth)acrylic acid copolymer, or a homogeneous or heterogeneous ethylene-$\alpha$-olefin copolymer with a density $\leq 0.915$ g/cm$^3$, and even more preferably a heterogeneous or homogeneous ethylene-($C_4$-$C_8$)-$\alpha$-olefin copolymer having a density comprised between about 0.895 g/cm$^3$ and about 0.912 g/cm$^3$. the outer layer (b) will comprise a polyolefin or , even more preferably, a polyamide, the intermediate layer (c) will comprise an SBS block copolymer, the barrier layer (e) will comprise PVDC, EVOH and/or a polyamide, the layer (d) adhering the intermediate layer (c) to the barrier layer (e), will comprise an ethylene-vinyl acetate copolymer or an ethylene-(meth)acrylic acid copolymer optionally blended with a modified ethylene-vinyl acetate copolymer, the layer (d') adhering the barrier layer (e) to the outer layer (b), will comprise an ethylene-vinyl acetate copolymer or an ethylene-(meth)acrylic acid copolymer optionally blended with a modified ethylene-vinyl acetate copolymer and the layer (d'') adhering the intermediate layer (c) to the outer heat-sealing layer (a), will comprise an ethylene-vinyl acetate copolymer or an ethylene-(meth)acrylic acid copolymer optionally blended with a modified ethylene-vinyl acetate copolymer.

Said layers (d') and (d'') may be equal to or different from (d) and from each other and as indicated above may be used also to improve the mechanical and/or shrink properties of the structure.

The resins used in the manufacture of the films according to the present invention, not only in the heat-sealing (a) but also, and mainly, in the second outer layer (b) or in any of the intermediate layers, can be suitably additivated as known in the art in order to improve the properties of the film or the manufacturing process thereof.

As an example the resins may contain stabilisers, anti oxidants, pigments, UV absorbers, cross-linking enhancers or cross-linking inhibitors, anti-fog agents, slip and anti-blocking agents, oxygen scavengers or oxygen absorbers, scavengers of oxygen absorber by-products, etc., as conventionally used in this field.

The maximum number of layers in the structures according to the present invention will only depend on the equipment available for the manufacture thereof. While up to 10 layers in the overall structure can be easily devised on the basis of the commonly available manufacturing lines, in practice structures with up to 7, 8 or 9 layers will be preferred.

The film of the present invention is a heat-shrinkable film.

In a preferred embodiment of the present invention, the film has a free shrink, measured at 95°C, of at least 20% in at least one direction, and more preferably of at least 30 % in at least one direction.

In a most preferred embodiment the film of the present invention has a free shrink, measured at 95°C, of at least 20 % in both directions, and more preferably of at least 30 % in both directions.

The films according to the present invention are typically obtained by coextrusion of the resins and/or blends of resins of the various layers through a round or flat extrusion die, quickly followed by quenching at room temperature. The thus obtained thick tape (called primary tape) is then reheated to the suitably selected orientation temperature and stretched mono-axially or bi-axially at this temperature to provide for a mono- or bi-axially oriented heat-shrinkable film.

When a round extrusion die is employed, stretching is generally carried out by the trapped bubble technique. In this technique the inner pressure of a gas such as air is used to expand the diameter of the thick tubing obtained from the extrusion to give a larger bubble transversely stretched, and the differential speed of the nip rolls that hold the bubble is used to get the longitudinal stretching. Generally, stretching is in a ratio of at least 3 in each direction. Alternatively, when a flat die is used in the extrusion, orientation is carried out by means of a tenter frame. Longitudinal stretching is generally obtained by passing the film on at least two couples of conveying rolls wherein the second set rotates at a speed higher than that of the first set. The transverse orientation is on the other hand obtained by blocking the film side edges by means of a series of clips that travel onto two continuous chains that gradually diverge with the advancing of the film. Alternatively to said sequential stretching, either longitudinal first and then transversal or transversal first and then longitudinal, stretching may also be simultaneous in both directions. In case of stretching by tenter-frame the stretching ratios are generally higher than with the trapped bubble method.

While in a preferred embodiment of the present invention the film is biaxially oriented, mono-oriented films or preferentially oriented films can be obtained by avoiding or controlling transversal or longitudinal orientation.

Depending on the number of layers in the structure it may be advisable or necessary to split the co-extrusion step : in such a case a tube is first formed of a limited number of layers, generally with heat-sealing layer (a) on the inside of the tube; this tube is quenched quickly and before submitting it to the orientation step it is extrusion-coated with the remaining layers, again quenched quickly, and then passed to the orientation. During the extrusion-coating step the tube is slightly inflated just to keep it in the form of a tube and avoid that it collapses.

The coating step can be simultaneous, by coextruding all the remaining layers altogether, so as to simultaneously adhere all of them, one over the other, to the quenched tube obtained in the first extrusion step, or this coating step can be repeated as many times as the layers which are to be added.

In a preferred embodiment of the present invention the film is wholly or partially cross-linked. Cross-linking may be achieved either by irradiation or chemically. Preferably cross-linking is achieved by irradiation that involves submitting the film to a suitable radiation dosage of high energy electrons, generally comprised between about 10 and about 120 KGrays, and preferably from about 20 to about 90 KGrays.

Irradiation is preferably but not necessarily performed before orientation.

If only some of the layers of the films need to be irradiated, the extrusion coating technique is used and the irradiation step is carried out on the primary tube or sheet, before extrusion coating and orientation.

In a preferred embodiment of the invention the oriented film will contain an oxygen barrier layer comprising PVDC, the film will be obtained by extrusion coating and only the primary tape that will not comprise the PVDC layer will be irradiatively cross-linked.

When the whole film is cross-linked by irradiation, it may be advantageous to make use of cross-linking controlling agents which can be added to the different layers in different amounts to control the degree of cross-linking in each layer. Suitable cross-linking controlling agents are for instance those described in EP-A-333,294.

Alternatively, chemical cross-linking of the resins can be achieved by the addition of suitable cross-linking agents, e.g. peroxides, to the resins to be cross-linked. It is also possible to combine chemical cross-linking and irradiation, as an example when the cross-linking agents added to the resins need some irradiation to trigger the cross-linking reaction.

The films according to the present invention may optionally be subjected to other types of energetic radiation treatments which may have different aims. As an example the outer abuse layer of the film may be subjected to a corona discharge treatment to improve the print receptivity characteristics of the film surface or the outer heat-sealant layer may be subjected to a corona discharge treatment to improve the heat-sealability and/or the meat adhesion properties thereof.

In some instances it may be desirable to submit the oriented structure to an annealing step; this typically consists in a controlled heating-cooling treatment that is carried out on the oriented film in order to have better control on low temperature dimensional stability of the heat-shrinkable film while maintaining the shrink properties at higher temperatures.

In some other instances it might be desirable to submit the oriented film to a heat-setting step, i.e. to submit the film to a drastic heat treatment while the film is restrained from shrinking. Upon said heat treatment the film will loose almost completely the shrink properties while maintaining and improving the good mechanical properties achieved with the orientation.

The film of the present invention may be used either as a film, or as a bag or pouch, or as a tubing to form a package in a conventional manner.

In a preferred embodiment the film is obtained as a tubular film and, if desired, individual bags are formed by transverse sealing and cutting across the flattened tubular film. Alternatively, bags can be made by slitting the tubular film along one edge and then transversely sealing and severing the film to produce bags. Other methods of making bags and packages are known and may be readily adapted to use with the multilayer films of the invention.

The Examples that follow are only aimed at better illustrating some representative embodiments of the present invention but in no way they should be interpreted as a limitation to the scope thereof.

Example 1

A four layer structure is prepared by coextrusion of

- a heat sealing layer (a) of a homogeneous ethylene-octene-1 copolymer with d = 0.900 g/cm$^3$ and Melt Index of 6 g/10' (Affinity™ PL1280 from Dow);
- an inner layer (d"), in face-to face contact with the heat-sealing layer (a), of a blend of 70 % by weight of an ethylene-vinyl acetate copolymer with 14.0 % by weight of vinyl acetate units and Melt Index of 0.25 g/10' (Escorene™ Ultra FL 00014 - Exxon) and 30 % by weight of a heterogeneous ethylene-octene-1 copolymer with d = 0.920 g/cm$^3$ and Melt Index of 1 g/10' (Dowlex™ 2045 by Dow);
- an intermediate layer (c), in face-to face contact with inner layer (d"), of a styrene/butadiene block copolymer with MI = 11 g/10' and DSC glass transition (2nd heating) = 98 °C (Styrolux™ 684D by BASF)
- an outer layer (b) in face-to-face contact with intermediate layer (c), of a blend of 70 % by weight of an ethylene-vinyl acetate copolymer with 14.0 % by weight of vinyl acetate units and Melt Index of 0.25 g/10' (Escorene™ Ultra FL 00014 - Exxon) and 30 % by weight of a heterogeneous ethylene-octene-1 copolymer with d = 0.920 g/cm$^3$ and Melt Index of 1 g/10' (Dowlex™ 2045 by Dow).

The extruded tubular film is cooled quickly and collapsed.

This 4-layer structure is irradiated by high energy electrons at a dosage of 53 kGy to provide crosslinking and oriented biaxially in both machine (MD) and transverse (TD) directions by a factor of about 3 (TD) and about 3.5 (MD) by feeding it through a hot water bath (90-94°C), inflating it to get the transversal orientation and stretching it to get the longitudinal orientation. The film is then rapidly cooled and rolled up for further processing.

The thickness of the layers in the final 4-layer structure is as follows :

Heat-seating layer (a) : 12 μm
Inner layer (d") : 10 μm
Inner layer (c) : 8 μm
Outer layer (b) : 12 μm.

Example 2

A four layer structure is prepared by following essentially the same procedure described above but replacing the polymer used for the heat-sealing layer (a) with a heterogeneous ethylene-octene copolymer with d = 0.911 g/cm$^3$ and Melt Index of 6 g/10' (Stamylex™ 08-076 - DSM).

The thickness of the layers in the final 4-layer structure is as follows :

Heat-sealing layer (a) : 14 μm
Inner layer (d") : 10 μm
Inner layer (c) : 18 μm
Outer layer (b) : 10 μm.

Example 3

A 7-layer structure is prepared by

- coextrusion of a four layer structure comprising

  - a heat sealing layer (a) of a homogeneous ethylene-octene-1 copolymer with d = 0.900 g/cm$^3$ and Melt Index of 6 g/10' (Affinity™ PL1280 from Dow);
  - an inner layer (d"), in face-to face contact with the heat-sealing layer (a), of a blend of 70 % by weight of an ethylene-vinyl acetate copolymer with 14.0 % by weight of vinyl acetate units and Melt Index of 0.25 g/10' (Escorene™ Ultra FL 00014 - Exxon) and 30 % by weight of a heterogeneous ethylene-octene-1 copolymer with d = 0.920 g/cm$^3$ and Melt Index of 1 g/10' (Dowlex™ 2045 by Dow);
  - an intermediate layer (c), in face-to face contact with inner layer (d"), of a styrene/butadiene block copolymer (Styrolux™ 684D by BASF)
  - a layer (d) in face-to-face contact with intermediate layer (c), of a blend of 70 % by weight of an ethylene-vinyl acetate copolymer with 14.0 % by weight of vinyl acetate units and Melt Index of 0.25 g/10' (Escorene™ Ultra FL 00014 - Exxon) and 30 % by weight of a heterogeneous ethylene-octene-1 copolymer with d = 0.920 g/cm$^3$ and Melt Index of 1 g/10' (Dowlex™ 2045 by Dow);

- quenching of the co-extruded tubular film;
- irradiation of the four layer tubular structure by high energy electrons at a dosage of 64 kGy;
- extrusion-coating, of the primary tape with - from the inside to the outside -:

  - an oxygen barrier layer (e), on top of layer (d), of PVDC containing 2 % by weight of epoxidised soybean oil;
  - an inner layer (d'), in face-to face contact with the oxygen barrier layer (e) of an acid modified ethylene-vinyl acetate copolymer with 18 % by weight of vinyl acetate units and Melt Index of about 2.7 g/10' (Bynel™ 3101 from DuPont); and
  - an outer layer (b), in face-to face contact with layer (d'), of a copolyamide 6/12 (40/60) with melting point = 127 °C (Grilon™ CA6E by EMS);

- a second quenching step, followed by biaxial orientation by a factor of 3 (TD) x 3.3 (MD), by feeding the extrusion coated tubing through a hot water bath (93-96 °C), inflating it to get the transversal orientation and stretching it to get the longitudinal orientation. The film is then rapidly cooled and rolled up for further processing. The overall film thickness is about 90 μm, while the partial thickness of the different layers - arranged in the end sequence from the inside (sealant) to the outside - is as follows :

Heat-sealing layer (a) : 12.5 μm

Inner layer (d") : 9.5 μm
Intermediate layer (c) : 23 μm
Inner layer (d) : 11.5 μm
Inner oxygen barrier layer (e) : 7.5 μm
Inner layer (d') : 5 μm
Outer layer (b) : 21 μm.

Example 4

A 7-layer structure is prepared by following exactly the same procedure described in Example 3 but avoiding the irradiation step.

Example 5

A 7-layer structure is prepared by following exactly the same procedure of Example 3 but varying the thickness ratio between the layers as follows :

Heat-sealing layer (a) : 12.5 μm
Inner layer (d") : 10.5 μm
Intermediate layer (c) : 20 μm
Inner layer (d) : 13.5 μm
Inner oxygen barrier layer (e) : 7.5 μm
Inner layer (d') : 5 μm
Outer layer (b) : 21 μm.

Example 6

A 7-layer structure is prepared by following exactly the procedure described in Example 3 but replacing the Styrolux™ 684D used for the intermediate layer (c) with a styrene/butadiene copolymer with MI = 7.5 g/10' and DSC glass transition (2nd heating) = 105 °C (Finaclear™ 520 by FINA).

Example 7

A 7-layer structure is prepared by following the procedure of the foregoing example but varying the thickness ratio of the different layers as follows :

Heat-sealing layer (a) : 12.5 μm
Inner layer (d") : 11.5 μm
Intermediate layer (c) : 17 μm
Inner layer (d) : 15.5 μm
Inner oxygen barrier. layer (e) : 7.5 μm
Inner layer (d') : 5 μm
Outer layer (b) : 21 μm.

In order to evaluate the films according to the present invention the following tests have been used :

<u>% unrestrained free shrink</u> : the % free shrink, i.e., the irreversible and rapid reduction, as a percent, of the original dimensions of a sample subjected to a given temperature under conditions where nil restraint to inhibit shrinkage is present, has been measured according to ASTM method D 2732, by immersing for 5 seconds specimens of the films (100-mm by 100-mm) into a bath of hot oil at 120°C. The % free shrink has been measured in both the longitudinal (machine) and transverse directions. The percent free shrink is defined, for each direction, as

$$\text{Unrestrained linear shrinkage, } \% = [(L_o - L_f)/L_o] \times 100$$

wherein $L_o$ is the initial length of side and $L_f$ is the length of side after shrinking.
<u>Shrink tension</u> : the shrink force, which is the force released by the material during the heating/shrinking process, when referred to the film thickness unit is indicated as shrink tension. It does not exist a standard method to evaluate it. It has therefore been measured by the following internal method : specimens of the films (2.54 cm x 14.0 cm) are cut in the longitudinal and transverse direction and clamped between two jaws, one of which is connected to a load cell. The two jaws keep the specimen in the centre of a channel into which an impeller blows heated air and three thermocouples measure the temperature. The signal supplied by the thermocouples is amplified and sent to an output connected to the "X" axis of a X/Y recorder. The signal supplied by the load cell is amplified and sent to an output connected to the "Y" axis of the X/Y recorder. The impeller starts blowing hot air and the force released by the sample is recorded in grams. The temperature is increased at a rate of $2°C/s$. As the temperature increases the pen draws on the X/Y recorder the measured profile of the shrink force versus the temperature thus producing a curve of the shrink force (expressed in g) versus temperature ($°C$). By dividing the values thus recorded and multiplied by $10^{-3}$, by the specimen width (expressed in cm), the shrink force (in Kg/cm) is obtained. By further diving it by the thickness (in cm) of the sample, it is obtained the shrink tension, in $kg/cm^2$, at the temperature considered.

Haze : haze is defined as the percentage of transmitted light which is scattered forward while passing through the sample and is measured by ASTM D 1003 (Method A).

Gloss : the film gloss, i.e. the surface reflectance of a specimen is measured according to ASTM D 2457 - 90 at a $60°$ angle.

Tensile strength : a measure of the force required, under constant elongation, to break a specimen of the film, has been evaluated by ASTM D 882.

Elongation : a measure of the percent extension required to break a specimen of the film, has been evaluated by ASTM D 882.

Modulus : it has also been evaluated by ASTM D 882 - Method A (these last three tests relate to the mechanical properties of the film)

Puncture resistance : the puncture resistance is the resistance force arising when pushing a punch against a surface of flexible film. There is not a standard test method to measure this attribute. The test method used in the present evaluations is described briefly herein below : a film sample (6.5 cm x 6.5 cm) is fixed in a specimen holder connected to a compression cell (1-50 kg normal sensitivity) mounted on a dynamometer (an Instron tensile tester); when the dynamometer is started, a punch (a punching sphere, 5-mm in diameter, soldered on a plunger) is brought against the film sample at a constant speed (30 cm/min.) and the force needed to puncture the sample is graphically recorded.

In-line abuse resistance : the capability of the tested structures to withstand without breakage the in-line packaging operations, i.e. loading, vacuumising, sealing, shrinking, and collecting the products through an idle roll conveyor, is defined as "in-line abuse resistance". Scope of this test is to provide a method to discriminate and rank bags of different structure at a laboratory level as to this aspect. The procedure to test this property is therefore devised so as to simulate as much as possible the most drastic conditions which might actually occur in the packaging lines. To perform this test, the bags to be examined are filled with metal blocks, vacuumised, sealed and shrunk on an industrial packaging line. The thus obtained packages are then checked for leakers and the in-line abuse resistance is evaluated by the % of rejects. Due to the harsh conditions purposely employed this number is typically high but, as indicated above, this test has not an absolute but only a relative meaning and its aim is to indicate whether a given structure is expected to have more or less abuse resistance of a standard bag used as comparison, when used at the customer plant.

The % Shrink, Maximum Shrink Tension, Haze, Gloss, Modulus, Tensile and Elongation of some representative structures of the present invention are reported on Table 1.

TABLE 1

|  | Structure of Example no. | | |
|---|---|---|---|
|  | 3 | 4 | 6 |
| % Shrink |  |  |  |
| 80 °C LS | 24 | 25 | 25 |
| 80 °C TS | 26 | 25 | 29 |
| 85 °C LS | 30 | 29 | 31 |
| 85 °C TS | 33 | 30 | 35 |
| 90 °C LS | 38 | 36 | 40 |
| 90 °C TS | 42 | 39 | 44 |

TABLE 1 (continued)

| | Structure of Example no. | | |
|---|---|---|---|
| Max. Shrink Tension (kg/cm$^2$) | | | |
| MD | 28.7 | 27.5 | 19.9 |
| TD | 20.6 | 17.7 | 18 |
| Haze | 6.3 | 7.0 | 5.1 |
| Gloss | 116 | 114 | 121 |
| Modulus (kg/cm$^2$) | | | |
| MD | 6810 | 6730 | 4630 |
| TD | 5440 | 5380 | 3740 |
| Tensile (kg/cm$^2$) | | | |
| MD | 778 | 694 | 971 |
| TD | 834 | 841 | 974 |
| Elongation (%) | | | |
| MD | 149 | 156 | 212 |
| TD | 147 | 165 | 187 |

The results of the Puncture resistance and In-line abuse resistance tests for some representative structures of the present invention are reported in Table II below.

The bags used for the in-line abuse resistance tests were, 165 mm x 230 mm, end sealed bags. For comparative purposes the results obtained with a commercially available High Abuse bag, 120 µm thick, sold by Cryovac as BB705 are reported on the right column.

TABLE II

| | Structure of Example no | | | Cryovac® |
|---|---|---|---|---|
| | 3 | 4 | 6 | BB705 |
| Puncture (kg) 90°C | 3.2 | 2.6 | 2.9 | 2.2 |
| In-line abuse % Rejects | n.a. | n.a. | 41 | 43 |
| n.a.=not available | | | | |

End-sealed bags, 230 mm x 330 mm, made with the film Example 6, were vacuumised and impulse sealed in a Cryovac® VC12 vacuum chamber. The Cryovac® VC 12 vacuum chamber is equipped with a Teflon® covered resistance wire affixed to the sealing jaws, and, parallel to that but slightly shifted towards the outside of the jaws, a hot trimming wire tensioned over the Teflon®.

The machine settings for sealing and hot trimming were the following ones :

| | |
|---|---|
| Sealing jaws pressure | 4 bar |
| Sealing jaws active | transversal jaws |
| Voltage | 13 volt |
| Ampere | 30 A |

The impulse times set were 1 s, 1.2 s, 1.5 s, 1.7 s, and 2.0 s.

The bags made with the film of Example 6 performed very well as at 1.2 s they gave, both in clean and in grease conditions, a good seal strength (about 3,000 g/inch) and a partial trimming. At 1.5 s they gave besides a good seal also a complete trimming.

For comparative purposes bags made with a film differing from that of Example 6 of the present invention only in the polymer used for the intermediate layer (c), that in said comparative film was a heterogeneous ethylene-octene-1 copolymer with d = 0.920 g/cm$^3$ and Melt Index of 1 g/10' (Dowlex™ 2045 by Dow), were tested in parallel. While comparable sealing properties were shown for these bags, it was however necessary an impulse time of $\geq 2$ s to get trimming.

**Claims**

1. A multi-layer, mono- or bi-axially oriented thermoplastic film which shrinks by at least 15 % in one or in both directions when heated to 95 °C for 4 seconds, said film comprising

   a first outer heat-sealing layer (a) which comprises a polyolefin;
   a second outer layer (b); and
   an intermediate layer (c) comprising a TPE-S.

2. The multi-layer film of claim 1 which has a free shrink, measured at 95°C, of at least 20% in at least one direction, and preferably of at least 30 % in at least one direction.

3. The film of claim 2 which has a free shrink, measured at 95°C, of at least 20 % in both directions, and more preferably of at least 30 % in both directions.

4. The film of claim 1 wherein the heat-sealing layer (a) comprises a single polymer or a blend of two or more polymers with melting point < 140 °C, and preferably < 130°C.

5. The film of claim 4 wherein the heat-sealing layer (a) comprises heterogeneous or homogeneous ethylene- $(C_4\text{-}C_8)$-$\alpha$-olefin copolymers having a density $\leq$ 0.915 g/cm$^3$; blends thereof with minor amount of polyethylene homopolymers; ethylene-vinyl acetate copolymers; ethylene-acrylic or methacrylic acid copolymers including ionomers; blends of heterogeneous or homogeneous ethylene-$(C_4\text{-}C_8)$-$\alpha$-olefin copolymers having a density from about 0.915 g/cm$^3$ to about 0.930 g/cm$^3$ with ethylene-vinyl acetate copolymers or ethylene-alkyl (meth)acrylate copolymers; ethylene-propylene copolymers; ethylene-propylene-butene ter-polymers; or ethylene-alkyl acrylate-maleic anhydride ter-polymers.

6. The film of claim 5 wherein the heat-sealing layer (a) comprises a heterogeneous or homogeneous ethylene-$(C_4\text{-}C_8)$-$\alpha$-olefin copolymer having a density $\leq$ 0.915 g/cm$^3$, and preferably a heterogeneous or homogeneous ethylene-$(C_4\text{-}C_8)$-$\alpha$-olefin copolymer having a density comprised between about 0.895 g/cm$^3$ and about 0.912 g/cm$^3$.

7. The film of claim 1 wherein the second outer layer (b) comprises at least one member selected from the group consisting of polyolefin, polyamide, polyester, and polystyrene.

8. The film of claim 7 wherein the outer layer (b) comprises heterogeneous or homogeneous ethylene- $(C_4\text{-}C_8)$-$\alpha$-olefin copolymers, polyethylene homopolymers, ethylene-vinyl acetate copolymers, ethylene-acrylic or methacrylic acid copolymers including ionomers, and blends thereof.

9. The film of claim 7 wherein the second outer layer (b) comprises a polyamide.

10. The film of claim 9 wherein the polyamide has a melting temperature lower than about 220 °C, generally lower than about 200 °C, preferably comprised between about 120 °C and about 180 °C.

11. The film of claim 1 wherein the intermediate layer (c) comprises at least one member of the group consisting of styrene-butadiene-styrene block terpolymer (SBS), styrene-ethylene/butene-styrene block terpolymer (SEBS), styrene-isoprene-styrene block terpolymer (SIS) and the hydrogenated derivatives thereof.

12. The film of claim 11 wherein the intermediate layer (c) comprises SBS polymers or their hydrogenated derivatives.

13. The film of claim 12 wherein the SBS of the intermediate layer (c) comprises 1 to 40 % by volume of a hard phase-forming polystyrene block with a Tg higher than 25 °C and 99 to 60 % by volume of a soft phase-forming styrene-butadiene block copolymer with a Tg lower than 25 °C.

14. The film of claim 1 wherein the intermediate layer (c) comprises a major proportion, preferably at least 50, more preferably at least 65 and most preferably at least 90 % by weight, based on the overall weight of the layer (c), of a TPE-S.

15. The film of claim 14 wherein the intermediate layer (c) essentially comprises one or more TPE-S.

**16.** The film of claim 1 which further comprises a gas barrier layer (e) as an inner layer.

**17.** The film of claim 16 wherein the gas barrier layer is positioned between the intermediate layer (c) and the outer layer (b).

**18.** The film of claim 16 wherein the gas barrier layer (e) comprises at least one member of the group consisting of PVDC (saran), EVOH, and polyamide.

**19.** The film of claim 18 wherein the gas barrier layer (e) comprises PVDC.

**20.** The film of claim 16 which comprises five layers : a first outer heat-sealing layer (a), a second outer layer (b), an intermediate layer (c), a core barrier layer (e) between the intermediate layer (c) and the outer layer (b) and a layer (d) adhering the intermediate layer (c) to the oxygen barrier layer (e).

**21.** The film of claim 20 wherein the heat-sealing layer (a) comprises an ethylene-vinyl acetate copolymer or an ethylene-(meth)acrylic acid copolymer optionally blended with a homogeneous or heterogeneous ethylene-$\alpha$-olefin copolymer, the outer layer (b) comprises a polyamide, the intermediate layer (c) comprises an SBS block copolymer, the barrier layer (e) comprises EVOH and/or a polyamide, and the layer (d) adhering the intermediate layer (c) to the barrier layer (e), comprises an ethylene-vinyl acetate copolymer or an ethylene-(meth)acrylic acid copolymer optionally blended with a modified ethylene-vinyl acetate copolymer.

**22.** The film of claim 20 wherein the heat-sealing layer (a) comprises an ethylene-vinyl acetate copolymer or an ethylene-(meth)acrylic acid copolymer optionally blended with a homogeneous or heterogeneous ethylene-$\alpha$-olefin copolymer, the outer layer (b) comprises a polyolefin, preferably an ethylene-vinyl acetate copolymer or an ethylene-(meth)acrylic acid copolymer optionally blended with a homogeneous or heterogeneous ethylene-$\alpha$-olefin copolymer, the intermediate layer (c) comprises an SBS block copolymer, the barrier layer (e) comprises PVDC or EVOH, and the layer (d) adhering the intermediate layer (c) to the barrier layer (e), comprises an ethylene-vinyl acetate copolymer or an ethylene-(meth)acrylic acid copolymer optionally blended with a modified ethylene-vinyl acetate copolymer.

**23.** The film according to claim 16 which comprises six layers : a first outer heat-sealing layer (a), a second outer layer (b), an intermediate layer (c), a core barrier layer (e) between the intermediate layer (c) and the outer layer (b), a layer (d) adhering the intermediate layer (c) to the oxygen barrier layer (e), and a layer (d') adhering the barrier layer (e) to the outer layer (b).

**24.** The film of claim 23 wherein the heat-sealing layer (a) comprises an ethylene-vinyl acetate copolymer or an ethylene-(meth)acrylic acid copolymer optionally blended with a homogeneous or heterogeneous ethylene-$\alpha$-olefin copolymer, the outer layer (b) comprises a polyamide, the intermediate layer (c) comprises an SBS block copolymer, the barrier layer (e) comprises PVDC, the layer (d) adhering the intermediate layer (c) to the barrier layer (e), comprises an ethylene-vinyl acetate copolymer or an ethylene-(meth)acrylic acid copolymer optionally blended with a modified ethylene-vinyl acetate copolymer, and the layer (d') adhering the barrier layer (e) to the outer layer (b), comprises an ethylene-vinyl acetate copolymer or an ethylene-(meth)acrylic acid copolymer optionally blended with a modified ethylene-vinyl acetate copolymer.

**25.** The film of claim 16 which comprises seven layers : a first outer heat-sealing layer (a), a second outer layer (b), an intermediate layer (c), a core barrier layer (e) between the intermediate layer (c) and the outer layer (b), a layer (d) adhering the intermediate layer (c) to the oxygen barrier layer (e), a layer (d') adhering the barrier layer (e) to the outer layer (b), and a layer (d'') adhering the intermediate layer (c) to the outer heat-sealing layer (a).

**26.** The film of claim 25 wherein the heat-sealing layer (a) comprises an ethylene-vinyl acetate copolymer, an ethylene-(meth)acrylic acid copolymer, or a homogeneous or heterogeneous ethylene-$\alpha$-olefin copolymer with a density $\leq 0.915$ g/cm$^3$, and preferably a heterogeneous or homogeneous ethylene-($C_4$-$C_8$)-$\alpha$-olefin copolymer having a density comprised between about 0.895 g/cm$^3$ and about 0.912 g/cm$^3$, the outer layer (b) comprises a polyolefin or, preferably, a polyamide, the intermediate layer (c) comprises an SBS block copolymer, the barrier layer (e) comprises PVDC, EVOH and/or a polyamide, the layer (d) adhering the intermediate layer (c) to the barrier layer (e), comprises an ethylene-vinyl acetate copolymer or an ethylene-(meth)acrylic acid copolymer optionally blended with a modified ethylene-vinyl acetate copolymer, the layer (d') adhering the barrier layer (e) to the outer layer (b), comprises an ethylene-vinyl acetate copolymer or an ethylene-(meth)acrylic acid copolymer optionally blended with a modified ethylene-vinyl acetate copolymer and the layer (d") adhering the intermediate layer (c) to the outer heat-sealing layer (a), comprises an ethylene-vinyl acetate copolymer or an ethylene-(meth)acrylic acid copolymer optionally blended with a modified ethylene-vinyl acetate copolymer.

27. The film of any of the preceding claims which is cross-linked or partially cross-linked.

28. A bag or pouch made from the film according to any of the preceding claims.

29. The bag or pouch of claim 28 obtained by sealing the first outer heat-sealing layer (a) to itself, wherein said first outer layer (a) is the inside bag layer.


**Patentansprüche**

1. Mehrschichtige, mono- oder biaxial orientierte thermoplastische Folie, die um mindestens 15 % in einer oder beiden Richtungen schrumpft, wenn sie 4 Sekunden auf 95°C erhitzt wird, wobei die Folie
eine erste äußere Heißsiegelschicht (a), die Polyolefin umfasst,
eine zweite äußere Schicht (b) und
eine Zwischenschicht (c) umfasst, die TPE-S umfasst.

2. Mehrschichtfolie nach Anspruch 1, die eine freie Schrumpfung, gemessen bei 95°C, von mindestens 20 % in mindestens einer Richtung und vorzugsweise mindestens 30 % in mindestens einer Richtung aufweist.

3. Folie nach Anspruch 2, die eine freie Schrumpfung, gemessen bei 95°C, von mindestens 20 % in beiden Richtungen und insbesondere mindestens 30 % in beiden Richtungen aufweist.

4. Folie nach Anspruch 1, bei der die Heißsiegelschicht (a) ein Einzelpolymer oder Gemisch aus zwei oder mehr Polymeren mit Schmelzpunkt < 140°C und vorzugsweise < 130°C umfasst.

5. Folie nach Anspruch 4, bei der die Heißsiegelschicht (a) heterogene oder homogene Ethylen/($C_4$- bis $C_8$)-$\alpha$-Olefin-Copolymere mit einer Dichte ≤ 0,915 g/cm$^3$; Gemische davon mit geringer Menge an Polyethylenhomopolymeren; Ethylen/Vinylacetat-Copolymere; Ethylen/Acryl- oder -Methacrylsäurecopolymere einschließlich Ionomeren; Gemische von heterogenen oder homogenen Ethylen/($C_4$- bis $C_8$)-$\alpha$-Olefin-Copolymeren mit einer Dichte von etwa 0,915 g/cm$^3$ bis etwa 0,930 g/cm$^3$ mit Ethylen/Vinylacetat-Copolymeren oder Ethylen/Alkyl(meth)acrylat-Copolymeren; Ethylen/Propylen-Copolymere; Ethylen/Propylen/Buten-Terpolymere oder Ethylen/Alkylacrylat/Maleinsäureanhydrid-Terpolymere umfasst.

6. Folie nach Anspruch 5, bei der die Heißsiegelschicht (a) heterogenes oder homogenes Ethylen/($C_4$- bis $C_8$)-$\alpha$-Olefin-Copolymer mit einer Dichte ≤ 0,915 g/cm$^3$ und vorzugsweise heterogenes oder homogenes Ethylen/($C_4$- bis $C_8$)-$\alpha$-Olefin-Copolymer mit einer Dichte zwischen etwa 0,895 g/cm$^3$ und etwa 0,912 g/cm$^3$ umfasst.

7. Folie nach Anspruch 1, bei der die zweite äußere Schicht (b) mindestens ein Mitglied ausgewählt aus der Gruppe bestehend aus Polyolefin, Polyamid, Polyester und Polystyrol umfasst.

8. Folie nach Anspruch 7, bei der die äußere Schicht (b) heterogene oder homogene Ethylen/($C_4$- bis $C_8$)-$\alpha$-Olefin-Copolymere, Polyethylenhomopolymere, Ethylen/Vinylacetat-Copolymere, Ethylen/Acryl- oder -Methacrylsäure-Copolymere einschließlich Ionomeren und Gemische davon umfasst.

9. Folie nach Anspruch 7, bei der die zweite äußere Schicht (b) Polyamid umfasst.

10. Folie nach Anspruch 9, bei der das Polyamid eine Schmelztemperatur unter etwa 220°C, im Allgemeinen unter etwa 200°C, vorzugsweise zwischen etwa 120°C und etwa 180°C hat.

11. Folie nach Anspruch 1, bei der die Zwischenschicht (c) mindestens ein Mitglied der Gruppe bestehend aus Styrol-Butadien-Styrol-Blockterpolymer (SBS), Styrol-Ethylen/Buten-Styrol-Blockterpolymer (SEBS), Styrol-Isopren-Styrol-Blockterpolymer (SIS) und den hydrierten Derivaten davon umfasst.

12. Folie nach Anspruch 11, bei der die Zwischenschicht (c) SBS-Polymere oder ihre hydrierten Derivate umfasst.

**13.** Folie nach Anspruch 12, bei der das SBS der Zwischenschicht (c) 1 bis 40 Vol.% von harte Phase bildendem Polystyrolblock mit einer $T_g$ höher als 25°C und 99 bis 60 Vol.% von weiche Phase bildendem Styrol-Butadien-Blockcopolymer mit einer $T_g$ unter 25°C umfasst.

**14.** Folie nach Anspruch 1, bei der die Zwischenschicht (c) einen größeren Anteil, vorzugsweise mindestens 50, insbesondere mindestens 65 und am meisten bevorzugt mindestens 90 Gew.-% TPE-S umfasst, bezogen auf das Gesamtgewicht der Schicht (c).

**15.** Folie nach Anspruch 14, bei der die Zwischenschicht (c) im Wesentlichen ein oder mehrere TPE-S umfasst.

**16.** Folie nach Anspruch 1, die ferner eine Gasbarriereschicht (e) als innere Schicht umfasst.

**17.** Folie nach Anspruch 16, bei der die Gasbarriereschicht zwischen der Zwischenschicht (c) und der äußeren Schicht (b) angeordnet ist.

**18.** Folie nach Anspruch 16, bei der die Gasbarriereschicht (e) mindestens ein Mitglied der Gruppe bestehend aus PVDC (Saran), EVOH und Polyamid umfasst.

**19.** Folie nach Anspruch 18, bei der die Gasbarriereschicht (e) PVDC umfasst.

**20.** Folie nach Anspruch 16, die fünf Schichten umfasst: eine erste äußere Heißsiegelschicht (a), eine zweite äußere Schicht (b), eine Zwischenschicht (c), eine Kern-Barriereschicht (e) zwischen der Zwischenschicht (c) und der äußeren Schicht (b) und eine Schicht (d), die die Zwischenschicht (c) an die Sauerstoffbarriereschicht (e) klebt.

**21.** Folie nach Anspruch 20, bei der die Heißsiegelschicht (a) Ethylen/Vinylacetat-Copolymer oder Ethylen(Meth)acrylsäure-Copolymer umfasst, gegebenenfalls gemischt mit homogenem oder heterogenem Ethylen/α-Olefin-Copolymer, die äußere Schicht (b) Polyamid umfasst, die Zwischenschicht (c) SBS-Blockcopolymer umfasst, die Barriereschicht (e) EVOH und/oder Polyamid umfasst und die Schicht (d), die die Zwischenschicht (c) an die Barriereschicht (e) klebt, Ethylen/Vinylacetat-Copolymer oder Ethylen/(Meth)acrylsäure-Copolymer umfasst, gegebenenfalls gemischt mit modifiziertem Ethylen/Vinylacetat-Copolymer.

**22.** Folie nach Anspruch 20, bei der die Heißsiegelschicht (a) Ethylen/Vinylacetat-Copolymer oder Ethylen(Meth)acrylsäure-Copolymer umfasst, gegebenenfalls gemischt mit homogenem oder heterogenem Ethylen/α-Olefin-Copolymer, die äußere Schicht (b) Polyolefin umfasst, vorzugsweise Ethylen/Vinylacetat-Copolymer oder Ethylen/(Meth)acrylsäure-Copolymer, gegebenenfalls gemischt mit homogenem oder heterogenem Ethylen/α-Olefin-Copolymer, die Zwischenschicht (c) SBS-Blockcopolymer umfasst, die Barriereschicht (e) PVDC oder EVOH umfasst und die Schicht (d), die die Zwischenschicht (c) an die Barriereschicht (e) klebt, Ethylen/Vinylacetat-Copolymer oder Ethylen/(Meth)acrylsäure-Copolymer umfasst, gegebenenfalls gemischt mit modifiziertem Ethylen/Vinylacetat-Copolymer.

**23.** Folie nach Anspruch 16, die sechs Schichten umfasst: eine erste äußere Heißsiegelschicht (a), eine zweite äußere Schicht (b), eine Zwischenschicht (c), eine Kern-Barriereschicht (e) zwischen der Zwischenschicht (c) und der äußeren Schicht (b), eine Schicht (d), die die Zwischenschicht (c) an die Sauerstoffbarriereschicht (e) klebt, und eine Schicht (d'), die die Barriereschicht (e) an die äußere Schicht (b) klebt.

**24.** Folie nach Anspruch 23, bei der die Heißsiegelschicht (a) Ethylen/Vinylacetat-Copolymer oder Ethylen(Meth)acrylsäure-Copolymer umfasst, gegebenenfalls gemischt mit homogenem oder heterogenem Ethylen/α-Olefin-Copolymer, die äußere Schicht (b) Polyamid umfasst, die Zwischenschicht (c) SBS-Blockcopolymer umfasst, die Barriereschicht (e) PVDC umfasst, die Schicht (d), die die Zwischenschicht (c) an die Barriereschicht (e) klebt, Ethylen/Vinylacetat-Copolymer oder Ethylen/(Meth)acrylsäure-Copolymer umfasst, gegebenenfalls gemischt mit modifiziertem Ethylen/Vinylacetat-Copolymer, und die Schicht (d'), die die Barriereschicht (e) an die äußere Schicht (b) klebt, Ethylen/Vinylacetat-Copolymer oder Ethylen/(Meth)acrylsäure-Copolymer umfasst, gegebenenfalls gemischt mit modifiziertem Ethylen/Vinylacetat-Copolymer.

**25.** Folie nach Anspruch 16, die sieben Schichten umfasst: eine erste äußere Heißsiegelschicht (a), eine zweite äußere Schicht (b), eine Zwischenschicht (c), eine Kern-Barriereschicht (e) zwischen der Zwischenschicht (c) und der äußeren Schicht (b), eine Schicht (d), die die Zwischenschicht (c) an die Sauerstoffbarriereschicht (e) klebt, und eine Schicht (d'), die die Barriereschicht (e) an die äußere Schicht (b) klebt, und eine Schicht (d''), die die Zwischenschicht (c) an die äußere Heißsiegelschicht (a) klebt.

26. Folie nach Anspruch 25, bei der die Heißsiegelschicht (a) Ethylen/Vinylacetat-Copolymer, Ethylen(Meth)acrylsäure-Copolymer oder homogenes oder heterogenes Ethylen/$\alpha$-Olefin-Copolymer mit einer Dichte ≤ 0,915 g/cm$^3$ und vorzugsweise heterogenes oder homogenes Ethylen/ (C$_4$- bis C$_8$)-$\alpha$-Olefin -Copolymer mit einer Dichte zwischen etwa 0,895 g/cm$^3$ und etwa 0,912 g/cm$^3$ umfasst, die äußere Schicht (b) Polyolefin oder vorzugsweise Polyamid umfasst, die Zwischenschicht (c) SBS-Blockcopolymer umfasst, die Barriereschicht (e) PVDC, EVOH und/oder Polyamid umfasst, die Schicht (d), die die Zwischenschicht (c) an die Barriereschicht (e) klebt, Ethylen/Vinylacetat-Copolymer oder Ethylen/(Meth)acrylsäure-Copolymer umfasst, gegebenenfalls gemischt mit modifiziertem Ethylen/Vinylacetat-Copolymer, die Schicht (d'), die die Barriereschicht (e) an die äußere Schicht (b) klebt, Ethylen/ Vinylacetat-Copolymer oder Ethylen/(Meth)acrylsäure-Copolymer umfasst, gegebenenfalls gemischt mit modifiziertem Ethylen/Vinylacetat-Copolymer, und die Schicht (d''), die die Zwischenschicht (c) an die äußere Schicht Heißsiegelschicht (a) klebt, Ethylen/Vinylacetat-Copolymer oder Ethylen/(Meth)acrylsäure-Copolymer umfasst, gegebenenfalls gemischt mit modifiziertem Ethylen/Vinylacetat-Copolymer.

27. Folie nach einem der vorhergehenden Ansprüche, die vernetzt oder teilweise vernetzt ist.

28. Beutel oder Tasche, der bzw. die aus der Folie gemäß einem der vorhergehenden Ansprüche hergestellt ist.

29. Beutel oder Tasche nach Anspruch 28, erhalten durch Siegeln der ersten äußeren Heißsiegelschicht (a) an sich selbst, wobei die erste äußere Schicht (a) die Beutelinnenseitenschicht ist.

**Revendications**

1. Film thermoplastique multicouche, à orientation monoaxiale ou biaxiale, qui subit un retrait d'au moins 15 % dans une direction ou dans les deux quand il est chauffé à 95°C pendant 4 secondes, ledit film comprenant:

   une première couche extérieure de thermoscellage (a) qui comprend une polyoléfine;
   une deuxième couche extérieure (b); et
   une couche intermédiaire (c) comprenant un TPE-S.

2. Film multicouche selon la revendication 1, qui a un retrait libre, mesuré à 95°C, d'au moins 20 % dans au moins une direction, et de préférence d'au moins 30 % dans au moins une direction.

3. Film selon la revendication 2 qui a un retrait libre, mesuré à 95°C, d'au moins 20 % dans les deux directions et mieux encore d'au moins 30 % dans les deux directions.

4. Film selon la revendication 1, dans lequel la couche de thermoscellage (a) comprend un seul polymère ou un mélange de deux polymères ou plus ayant un point de fusion inférieur à 140°C, de préférence inférieur à 130°C.

5. Film selon la revendication 4, dans lequel la couche de thermoscellage (a) comprend des copolymères hétérogènes ou homogènes d'éthylène/$\alpha$-oléfine en C$_4$ à C$_8$ ayant une masse volumique de 0,915 g/cm$^3$ ou moins; leurs mélanges avec une quantité mineure d'homopolymères de polyéthylène; des copolymères d'éthylène/acétate de vinyle; des copolymères d'éthylène/acide acrylique ou méthacrylique, y compris les ionomères; des mélanges de copolymères hétérogènes ou homogènes d'éthylène/$\alpha$-oléfine en C$_4$ à C$_8$ ayant une masse volumique d'environ 0,915 g/cm$^3$ à environ 0,930 g/cm$^3$ avec des copolymères d'éthylène/acétate de vinyle ou des copolymères d'éthylène/(méth)acrylate d'alkyle; des copolymères d'éthylène/propylène; des terpolymères d'éthylène/propylène/butène; ou des terpolymères d'éthylène/acrylate d'alkyle/anhydride maléique.

6. Film selon la revendication 5, dans lequel la couche thermoscellable (a) comprend un copolymère hétérogène ou homogène d'éthylène/$\alpha$-oléfine en C$_4$ à C$_8$ ayant une masse volumique de 0,915 g/cm$^3$ ou moins, et de préférence un copolymère hétérogène ou homogène d'éthylène/$\alpha$-oléfine en C$_4$ à C$_8$ ayant une masse volumique comprise entre environ 0,895 g/cm$^3$ et environ 0,912 g/cm$^3$.

7. Film selon la revendication 1, dans lequel la deuxième couche extérieure (b) comprend au moins un élément choisi dans le groupe constitué par une polyoléfine, un polyamide, un polyester, et un polystyrène.

8. Film selon la revendication 7, dans lequel la couche extérieure (b) comprend des copolymères hétérogènes ou homogènes d'éthylène/α-oléfine en C$_4$ à C$_8$, des homopolymères de polyéthylène, des copolymères d'éthylène/ acétate de vinyle, des copolymères d'éthylène/acide acrylique ou méthacrylique, y compris les ionomères, et leurs mélanges.

9. Film selon la revendication 7, dans lequel la deuxième couche extérieure (b) comprend un polyamide.

10. Film selon la revendication 9, dans lequel le polyamide a une température de fusion inférieure à environ 220°C, généralement inférieure à environ 200°C, de préférence comprise entre environ 120°C et environ 180°C.

11. Film selon la revendication 1, dans lequel la couche intermédiaire (c) comprend au moins un élément du groupe constitué par un terpolymère séquencé de styrène/butadiène/styrène (SBS), un terpolymère séquencé de styrène/ éthylène-butène/styrène (SEBS), un terpolymère séquencé de styrène/isoprène/styrène (SIS) et leurs dérivés hydrogénés.

12. Film selon la revendication 11, dans lequel la couche intermédiaire (c) comprend des polymères SBS ou leurs dérivés hydrogénés.

13. Film selon la revendication 12, dans lequel le SBS de la couche intermédiaire (c) comprend 1 à 40 % en volume d'un bloc de polystyrène formant une phase dure ayant une Tg supérieure à 25°C et 99 à 60 % en volume d'un copolymère séquencé de styrène/butadiène formant une phase molle ayant une Tg inférieure à 25°C.

14. Film selon la revendication 1, dans lequel la couche intermédiaire (c) comprend une proportion majeure, de préférence au moins 50, mieux encore au moins 65 et tout spécialement au moins 90 % en poids, sur la base du poids global de la couche (c), d'un TPE-S.

15. Film selon la revendication 14, dans lequel la couche intermédiaire (c) comprend principalement un ou plusieurs TPE-S.

16. Film selon la revendication 1, qui comprend en outre une couche formant barrière aux gaz (e) sous forme de couche intérieure.

17. Film selon la revendication 16, dans lequel la couche formant barrière aux gaz est positionnée entre la couche intermédiaire (c) et la couche extérieure (b).

18. Film selon la revendication 16, dans lequel la couche formant barrière aux gaz (e) comprend au moins un élément du groupe constitué par le PVDC (saran), l'EVOH, et le polyamide.

19. Film selon la revendication 18, dans lequel la couche formant barrière aux gaz (e) comprend du PVDC.

20. Film selon la revendication 16, qui comprend cinq couches: une première couche extérieure de thermoscellage (a), une deuxième couche extérieure (b), une couche intermédiaire (c), une couche de coeur formant barrière (e) entre la couche intermédiaire (c) et la couche extérieure (b), et une couche (d) faisant adhérer la couche intermédiaire (c) à la couche formant barrière à l'oxygène (e).

21. Film selon la revendication 20, dans lequel la couche de thermoscellage (a) comprend un copolymère d'éthylène/ acétate de vinyle ou un copolymère d'éthylène/acide (méth)acrylique éventuellement mélangé avec un copolymère homogène ou hétérogène d'éthylène/α-oléfine, la couche extérieure (b) comprend un polyamide, la couche intermédiaire (c) comprend un copolymère séquencé SBS, la couche formant barrière (e) comprend de l'EVOH et/ou un polyamide, et la couche (d) faisant adhérer la couche intermédiaire (c) à la couche formant barrière (e) comprend un copolymère d'éthylène/acétate de vinyle ou un copolymère d'éthylène/acide (méth)acrylique éventuellement mélangé avec un copolymère modifié d'éthylène/acétate de vinyle.

22. Film selon la revendication 20, dans lequel la couche de thermoscellage (a) comprend un copolymère d'éthylène/ acétate de vinyle ou un copolymère d'éthylène/acide (méth)acrylique éventuellement mélangé avec un copolymère homogène ou hétérogène d'éthylène/α-oléfine, la couche extérieure (b) comprend une polyoléfine et de préférence un copolymère d'éthylène/acétate de vinyle ou un copolymère d'éthylène/acide (méth)acrylique éventuellement mélange avec un copolymère homogène ou hétérogène d'éthylène/α-oléfine, la couche intermédiaire (c) comprend un copolymère séquencé SBS, la couche formant barrière (e) comprend du PVDC ou de l'EVOH, et la couche (d) faisant adhérer la couche intermédiaire (c) à la couche formant barrière (e) comprend un copolymère d'éthylène/acétate de vinyle ou un copolymère d'éthylène/acide (méth)acrylique éventuellement mélangé avec un copolymère modifié d'éthylène/acétate de vinyle.

**23.** Film selon la revendication 16, qui comprend six couches: une première couche extérieure de thermoscellage (a), une deuxième couche extérieure (b), une couche intermédiaire (c), une couche de coeur formant barrière (e) entre la couche intermédiaire (c) et la bouche extérieure (b), une couche (d) faisant adhérer la couche intermédiaire (c) à la couche formant barrière à l'oxygène (e), et une couche (d') faisant adhérer la couche formant barrière (e) à la couche extérieure (b).

**24.** Film selon la revendication 23, dans lequel la couche de thermoscellage (a) comprend un copolymère d'éthylène/acétate de vinyle ou un copolymère d'éthylène/acide (méth)acrylique éventuellement mélangé avec un copolymère homogène ou hétérogène d'éthylène/$\alpha$-oléfine, la couche extérieure (b) comprend un polyamide, la couche intermédiaire (c) comprend un copolymère séquencé SBS, la couche formant barrière (e) comprend du PVDC, la couche (d) faisant adhérer la couche intermédiaire (c) à la couche formant barrière (e) comprend un copolymère d'éthylène/acétate de vinyle ou un copolymère d'éthylène/acide (méth)acrylique éventuellement mélangé avec un copolymère modifié d'éthylène/acétate de vinyle, et la couche (d') faisant adhérer la couche formant barrière (e) à la couche extérieure (b) comprend un copolymère d'éthylène/acétate de vinyle ou un copolymère d'éthylène/acide (méth)acrylique éventuellement mélangé avec un copolymère modifié d'éthylène/acétate de vinyle.

**25.** Film selon la revendication 16, qui comprend sept couches: une première couche extérieure de thermoscellage (a), une deuxième couche extérieure (b), une couche intermédiaire (c), une couche de coeur formant barrière (e) entre la couche intermédiaire (c) et la couche extérieure (b), une couche (d) faisant adhérer la couche intermédiaire (c) à la couche formant barrière à l'oxygène (e), une couche (d') faisant adhérer la couche formant barrière (e) à la couche extérieure (b), et une couche (d'') faisant adhérer la couche intermédiaire (c) à la couche extérieure de thermoscellage (a).

**26.** Film selon la revendication 25, dans lequel la couche de thermoscellage (a) comprend un copolymère d'éthylène/acétate de vinyle, un copolymère d'éthylène/acide (méth)acrylique ou un copolymère homogène ou hétérogène d'éthylène/$\alpha$-oléfine ayant une masse volumique de 0,915 g/cm$^3$ ou moins, mieux encore un copolymère hétérogène ou homogène d'éthylène/$\alpha$-oléfine en $C_4$ à $C_8$ ayant une masse volumique comprise entre environ 0,895 g/cm$^3$ et environ 0,912 g/cm$^3$, la couche extérieure (b) comprend une polyoléfine ou, mieux encore, un polyamide, la couche intermédiaire (c) comprend un copolymère séquencé SBS, la couche formant barrière (e) comprend du PVDC, de l'EVOH et/ou un polyamide, la couche (d) faisant adhérer la couche intermédiaire (c) à la couche formant barrière (e) comprend un copolymère d'éthylène/acétate de vinyle ou un copolymère d'éthylène/acide (méth)acrylique éventuellement mélangé avec un copolymère modifié d'éthylène/acétate de vinyle, la couche (d') faisant adhérer la couche formant barrière (e) à la couche extérieure (b) comprend un copolymère d'éthylène/acétate de vinyle ou un copolymère d'éthylène/acide (méth)acrylique éventuellement mélangé avec un copolymère modifié d'éthylène/acétate de vinyle, et la couche (d'') faisant adhérer la couche intermédiaire (c) à la couche extérieure de thermoscellage (a) comprend un copolymère d'éthylène/acétate de vinyle ou un copolymère d'éthylène/acide (méth)acrylique éventuellement mélangé avec un copolymère modifié d'éthylène/acétate de vinyle.

**27.** Film selon l'une quelconque des revendications précédentes, qui est réticulé ou partiellement réticulé.

**28.** Sac ou poche produit à partir du film selon l'une quelconque des revendications précédentes.

**29.** Sac ou poche selon la revendication 28, obtenu par scellement de la première couche extérieure de thermoscellage (a) à elle-même, où ladite première couche extérieure (a) est la couche intérieure du sac.